# DEMANDE DE BREVET EUROPEEN

(11) **EP 1 303 141 A1**
(43) Date de publication de la demande: **16.04.2003**
(21) Numéro de dépôt: 02078820.4
(22) Date de dépôt: 17.09.2002
(51) Int. Cl.: H04N 7/26

(54) **Procédé de conversion de données vidéo codées.**

(30) Priorité: 25.09.2001 FR 0112329
(71) Demandeur: Koninklijke Philips Electronics N.V., 5621 BA Eindhoven (NL)
(72) Inventeur: Lecoutre, Cédric, 75008 Paris (FR); Sy, Alexandre, 75008 Paris (FR)
(74) Mandataire: Chaffraix, Jean

(57) **Abrégé**

La présente invention concerne un procédé de conversion de données vidéo codées (1) selon une technique de codage par blocs et ayant un premier format d'image en des données vidéo décodées (2) ayant un second format d'image. Ledit procédé comprend notamment une étape de quantification inverse (11) apte à fournir un bloc d'erreur de données transformées. Il comprend également une étape de filtrage-décodage comportant les sous-étapes de troncature (21a) d'un bloc de données transformées, d'ajout de zéros (21b) au bloc tronqué de données transformées de manière à retrouver une taille du bloc avant troncature, et de transformation discrète inverse (21c) du bloc ainsi complété de manière à fournir un bloc de données filtrées décodées. Il comprend enfin une étape de sous-échantillonnage (22) apte à fournir des données vidéo décodées ayant le second format d'image. Un tel procédé de conversion de données vidéo autorise ainsi un grand nombre de conversion de formats pour une complexité réduite et une bonne qualité visuelle.

## Description

### Domaine technique de l'invention

La présente invention concerne un procédé de conversion de données vidéo codées selon une technique de codage par blocs et ayant un premier format d'image en des données vidéo décodées ayant un second format d'image, ledit procédé comprenant une étape de quantification inverse apte à fournir un bloc d'erreur de données transformées.

Elle trouve notamment son application dans le décodage d'images codées selon la norme MPEG par exemple, lesdites images ayant été codées selon un premier format d'image et étant décodées selon un second format d'image.

### Etat de la technique antérieure

Une méthode connue de conversion de données vidéo codées ayant un premier format d'image en des données vidéo décodées ayant un second format d'image consiste à décoder les données vidéo codées avec un décodeur conventionnel selon le premier format d'image puis à filtrer les données ainsi décodées afin de les convertir au second format d'image. Cette opération de filtrage s'effectue dans le domaine spatial. Elle comprend un sous-échantillonnage des données vidéo, constitué généralement par un filtre passe-bas et une décimation. Un tel filtrage nécessite de ce fait de nombreuses opérations de calcul. Les coefficients du filtre peuvent être optimisés de façon à réduire la complexité de la mise en oeuvre dudit filtre, mais une telle solution reste néanmoins coûteuse à implémenter en termes de ressources de calcul.

Il est possible de tirer profit des informations issues du décodage en effectuant un filtrage des données dans le domaine fréquentiel. Le document intitulé 'Minimal error drift in frequency scalability for motion-compensated DCT coding', IEEE transactions on circuits and systems for video technology, vol. 4, n°4, août 94, par Robert Mokry et Dimitris Anastassiou, propose une méthode telle que décrite dans le paragraphe introductif de la demande de brevet.

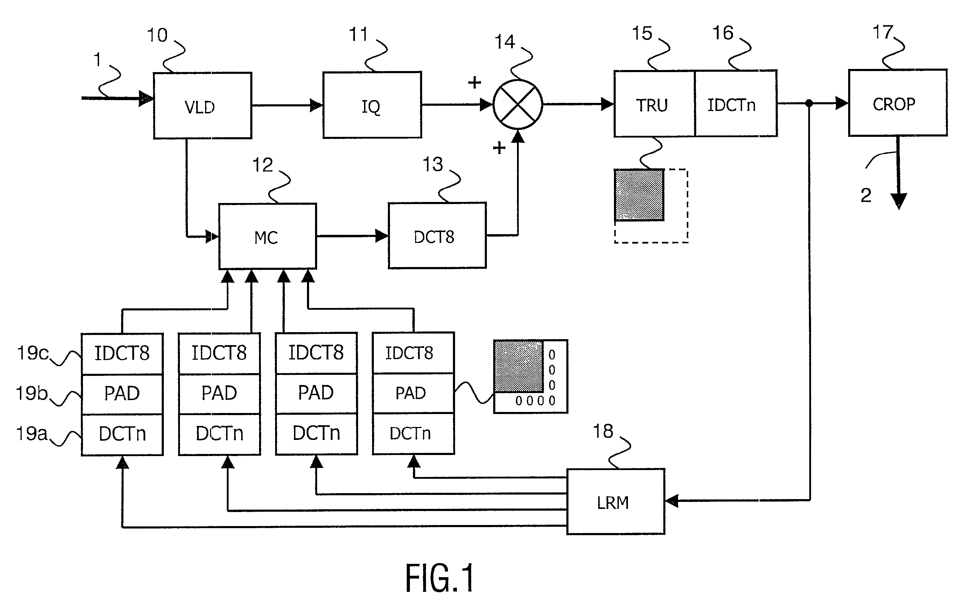

La méthode de conversion de données vidéo de l'état de la technique antérieure, décrite à la Fig. 1, comprend une étape de décodage à longueur variable VLD (10) apte à recevoir les données vidéo codées (1) ayant un premier format d'image et à fournir, d'une part, des données vidéo partiellement décodées à une étape de quantification inverse IQ (11), et, d'autre part, des vecteurs de mouvement à une étape de compensation de mouvement MC (12). L'étape de compensation de mouvement fournit un bloc de données décodées de référence à une étape de transformation en cosinus discrète DCT8 (13) apte à traiter un bloc de 8x8 données décodées. Une étape d'addition (14) somme les blocs de données issus respectivement de l'étape de quantification inverse IQ et de l'étape de transformation en cosinus discrète DCT8 et transmet le résultat à une étape de filtrage-décodage. Ladite étape de filtrage-décodage est constituée par une sous-étape de troncature TRU (15) des données transformées additionnées, résultant en un bloc tronqué de 8xn données, n étant un entier inférieur à 8 et dépendant du rapport entre les premier et second formats, et d'une sous-étape de transformation en cosinus discrète inverse IDCTn (16) du bloc tronqué de données transformées. Les blocs de données vidéo ainsi décodées sont alors assemblés et recadrés (17) pour former une séquence d'images ayant le second format d'image. Lesdits blocs de données vidéo décodées sont également stockés dans une mémoire LRM (18) basse résolution. Cette mémoire est apte à former 4 blocs tronqués de données qui subissent chacun une étape de traitement constituée par une transformation en cosinus discrète DCTn (19a), un ajout de zéros PAD (19b) au bloc tronqué de données transformées de manière à retrouver une taille du bloc avant troncature, soit ici 8x8 données transformées, et une transformation en cosinus discrète inverse IDCT8 (19c) du bloc ainsi complété. Les résultats de cette étape de traitement sont transmis à l'étape de compensation de mouvement MC afin que celle puisse déterminer le bloc de 8x8 données décodées de référence à l'intérieur des 4 blocs de 8x8 données traitées.

Cette solution permet une conversion de données vidéo pour des rapports de format égaux à n/8. Par conséquent, elle est inadaptée à certaines conversions, par exemple pour un rapport de formats égal à 2/3, correspondant par exemple à une conversion d'un format 3/4 d'image (528 colonnes par 576 lignes) en un format quart d'image (352 colonnes par 288 lignes), également appelé format CIF.

### Exposé de l'invention

La présente invention a pour but de proposer un procédé de conversion de données vidéo codées ayant un premier format d'image en des données vidéo décodées ayant un second format d'image, qui permette davantage de conversions de format, tout en restant de complexité raisonnable et en conservant une qualité visuelle convenable.

A cet effet, le procédé de conversion de données vidéo tel que décrit dans le paragraphe introductif est remarquable en ce qu'il comprend une étape de sous-échantillonnage, apte à fournir des données vidéo décodées ayant le second format d'image, et une étape de filtrage-décodage, entre l'étape de quantification inverse et l'étape de sous-échantillonnage, comportant les sous-étapes de troncature d'un bloc de données transformées, d'ajout de zéros au bloc tronqué de données transformées de manière à retrouver une taille du bloc avant troncature, et de transformation discrète inverse du bloc ainsi complété de manière à fournir un bloc de données filtrées décodées.

Le procédé de conversion selon l'invention autorise dans un premier temps la reconstruction d'une image ayant un contenu fréquentiel limité à partir des blocs de données filtrées décodées issus de l'étape de filtrage-décodage, la sous-étape de troncature ayant permis d'éliminer les hautes fréquences qui doivent être filtrées avant le sous-échantillonnage afin d'éviter un repliement de spectre, et la génération de défauts visibles à l'intérieur desdits blocs. Il permet dans un second temps d'effectuer un sous-échantillonnage rapide par simple décimation, en gardant par exemple 2 points sur 3 dans le cas d'un rapport de formats égal à 2/3.

Un tel procédé de conversion de données vidéo autorise ainsi un plus grand nombre de conversion de formats que l'état de la technique antérieure pour une complexité réduite et une bonne qualité visuelle.

La présente invention concerne également un dispositif de décodage implémentant le procédé de conversion de données vidéo.

Elle concerne enfin un produit programme d'ordinateur' pour la mise en oeuvre du procédé de conversion de données vidéo selon l'invention.

### Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :
- la Fig. 1 décrit le procédé de conversion de données vidéo selon l'état de la technique antérieure,
- la Fig. 2 représente un premier mode de réalisation du procédé de conversion de données vidéo selon l'invention,
- la Fig. 3 représente un second mode de réalisation du procédé de conversion de données vidéo selon l'invention, et
- la Fig. 4 illustre l'étape de sous-échantillonnage du procédé de conversion de données vidéo selon l'invention.

### Exposé détaillé d'au moins un mode de réalisation de l'invention

La présente invention concerne un procédé de conversion de données vidéo codées selon une technique de codage par blocs et ayant un premier format d'image en des données vidéo décodées ayant un second format d'image. Elle s'applique notamment aux données vidéo codées selon la norme MPEG ou selon des normes équivalentes (H. 261 ou H. 263), ces normes utilisant généralement des blocs de 8x8 données. Les décodeurs basés sur la norme MPEG sont aptes à recevoir des flux de données vidéo codées ayant différents types de format vidéo d'entrée comme, par exemple, le format 'pleine résolution' (576 lignes de 720 pixels), le format '3/4' (576 lignes de 528 pixels), le format '2/3' (576 lignes de 480 pixels) ou le format '1/2' (576 lignes de 352 pixels). Un décodeur vidéo doit être apte à redimensionner le flux de données vidéo codées dans un format réduit de sortie, le format 'CIF' (288 lignes de 352 pixels) par exemple. Les données vidéo sont, dans notre exemple, les valeurs de luminance et de chrominance de pixels contenus dans une image numérique.

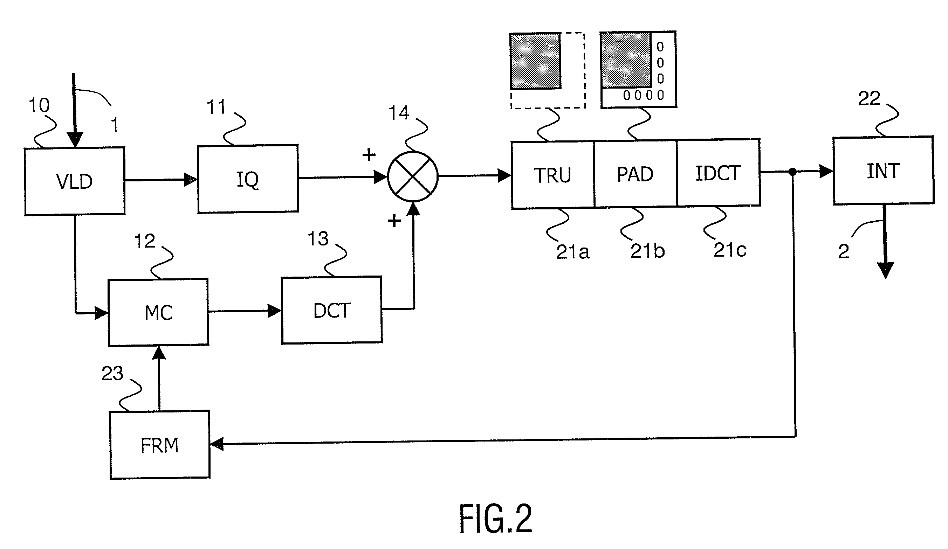

Selon un premier mode de réalisation, représenté à la Fig. 2, le procédé de conversion de données vidéo selon l'invention propose d'effectuer un re-dimensionnement de l'image de la façon suivante.

Le procédé de conversion de données vidéo comprend tout d'abord une étape de décodage à longueur variable VLD (10) apte à recevoir des données vidéo codées (1) ayant un premier format d'image et à fournir, d'une part, des données vidéo partiellement décodées à une étape de quantification inverse IQ (11), et, d'autre part, des vecteurs de mouvement à une étape de compensation de mouvement MC (12). L'étape de compensation de mouvement fournit un bloc de données décodées de référence à une étape de transformation discrète DCT (13), une transformation en cosinus discrète dans notre exemple ou toute autre transformation équivalente, ladite transformation étant apte à transformer ledit bloc de données décodées de référence en un bloc de données transformées de référence.

Le procédé de conversion de données vidéo comprend également une étape de filtrage-décodage apte à traiter une somme (14) d'un bloc d'erreur de données transformées fourni par l'étape de quantification inverse IQ, et du bloc de données transformées de référence. L'étape de filtrage-décodage comporte les sous-étapes de troncature TRU (21a) du bloc de données transformées issu de l'addition (14), d'ajout de zéros PAD (21b) au bloc tronqué de données transformées de manière à retrouver une taille du bloc avant troncature, et de transformation discrète inverse IDCT (21c) du bloc ainsi complété. La sous-étape de troncature consiste à extraire, à l'intérieur du bloc de données transformées, un bloc tronqué de m x n données transformées, m et n étant des entiers inférieurs ou égaux à la hauteur et à la largeur du bloc d'entrée, ce bloc tronqué étant situé en haut et à gauche du bloc d'entrée et correspondant donc, de ce fait, aux données transformées basse fréquence. Selon une variante particulièrement avantageuse de ce premier mode de réalisation, le bloc tronqué correspond à une fraction du bloc de données transformées sensiblement égale à un rapport du second format d'image sur le premier format d'image, ce rapport de formats équivalant en quelque sorte à une fréquence de coupure normée. La sous-étape d'ajout de zéros au bloc tronqué de m x n données transformées permet d'obtenir un bloc complété de 8x8 données transformées dans le cas de la norme MPEG. Le bloc complété subit alors une transformation discrète inverse IDCT, une transformation en cosinus discrète inverse dans notre exemple ou toute autre transformation équivalente, afin de fournir un bloc de données filtrées décodées.

Dans le cas d'une conversion de données vidéo codées ayant un premier format 3/4 d'image en des données vidéo décodées ayant un format CIF, le rapport de formats est de 2/3. Selon la variante particulièrement avantageuse du mode de réalisation, le bloc tronqué de données transformées comporte alors 8 lignes de 5 données transformées, le rapport 5/8 = 0,625 étant le plus proche du rapport 2/3 tout en restant inférieur à ce dernier. Prendre davantage de données transformées entraînerait une dégradation de l'image après l'étage de sous-échantillonnage à cause du repliement spectral tandis que prendre moins de données transformées équivaudrait à trop filtrer le contenu de l'image.

Le procédé de conversion de données vidéo comprend une étape de stockage FRM (23) des données filtrées décodées. Contrairement à l'état de la technique antérieure, la mémoire FRM contient des données filtrées décodées qui, bien qu'ayant un contenu fréquentiel limité, possèdent une pleine résolution. L'étape de compensation de mouvement MC peut ainsi trouver directement un bloc de données filtrées décodées de référence dans la mémoire FRM, le décodage s'en trouvant ainsi optimisé. De plus la compensation de mouvement ainsi réalisée permet de minimiser la dérive due au fait que le décodage utilise des images reconstruites différentes de celles que le codeur d'origine avait à sa disposition, ceci de manière à ne pas dégrader la qualité visuelle de l'image après conversion.

Le procédé de conversion de données vidéo comprend enfin une étape de sous-échantillonnage INT (22) apte à recevoir le bloc de données filtrées décodées et à fournir des données vidéo décodées ayant le second format. Le sous-échantillonnage des données peut s'effectuer par simple recopie de certaines données filtrées décodées, par interpolation linéaire entre deux données filtrées décodées ou par une interpolation plus complexe.

Dans le cas d'une conversion de données vidéo codées selon un rapport de formats égal à 2/3, on peut, par exemple effectuer une simple décimation en gardant deux données filtrées décodées sur 3. On peut également garder 1 donnée filtrée décodée sur 3 et générer l'autre donnée décodée en faisant une interpolation linéaire sur les deux autres données filtrées décodées.

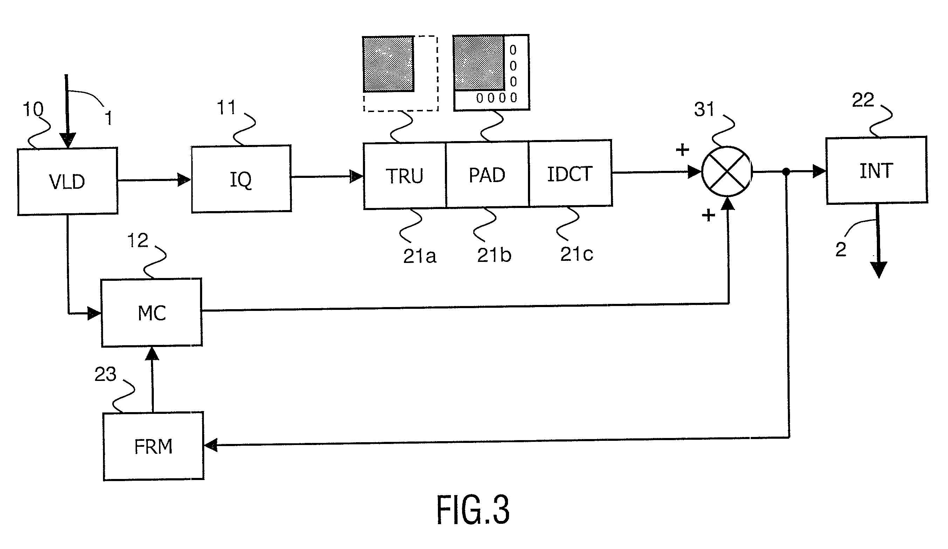

Selon un second mode de réalisation correspondant au mode de réalisation préféré et représenté à la Fig. 3, le procédé de conversion de données vidéo selon l'invention propose d'effectuer un sous-échantillonnage des données vidéo de la façon suivante.

Ledit procédé de conversion de données vidéo comprend tout d'abord une étape de décodage à longueur variable VLD (10) apte à recevoir des données vidéo codées (1) ayant un premier format d'image et à fournir, d'une part, des données vidéo partiellement décodées à une étape de quantification inverse IQ (11), et, d'autre part, des vecteurs de mouvement à une étape de compensation de mouvement MC (12) apte à fournir un bloc de données décodées de référence.

Le procédé de conversion de données vidéo comprend également une étape de filtrage-décodage apte à traiter un bloc d'erreur de données transformées issu de l'étape de quantification inverse IQ. L'étape de filtrage-décodage comporte les sous-étapes :
- de troncature TRU (21a) apte à extraire, à l'intérieur du bloc d'erreur de données transformées, un bloc tronqué de m x n données transformées, m et n étant des entiers inférieurs ou égaux à la hauteur et à la largeur du bloc d'erreur, ce bloc tronqué étant situé en haut et à gauche dudit bloc d'erreur ;
- d'ajout de zéros PAD (21b) au bloc tronqué de m x n données transformées de manière à retrouver une taille du bloc avant troncature, c'est à dire un bloc complété de 8x8 données transformées dans le cas de la norme MPEG ;
- de transformation discrète inverse IDCT (21c) du bloc ainsi complété afin de fournir un bloc de données filtrées décodées.

Dans le cas d'une conversion de données vidéo codées selon un rapport de formats égal à 2/3, le bloc tronqué de données transformées peut comporter 8 lignes de 5 données transformées, comme dans le premier mode de réalisation.

Selon une variante particulièrement avantageuse du mode de réalisation préféré, le bloc tronqué correspond à une moitié d'un bloc de données transformées. Dans le cas d'une conversion de données vidéo codées selon un rapport de formats égal à 2/3, le bloc tronqué de données transformées comporte alors 8 lignes de 4 données transformées. Le fait de prendre uniquement 4 données transformées sur 8 affecte peu la qualité visuelle des images issues du procédé de conversion car on travaille désormais sur le bloc d'erreur et non sur le bloc reconstruit comme dans le cas de la Fig. 2. Cette simplification permet au procédé de conversion de données vidéo selon le mode de réalisation préféré de gagner en efficacité, notamment au niveau de la transformation discrète inverse IDCT qui s'en trouve grandement simplifiée.

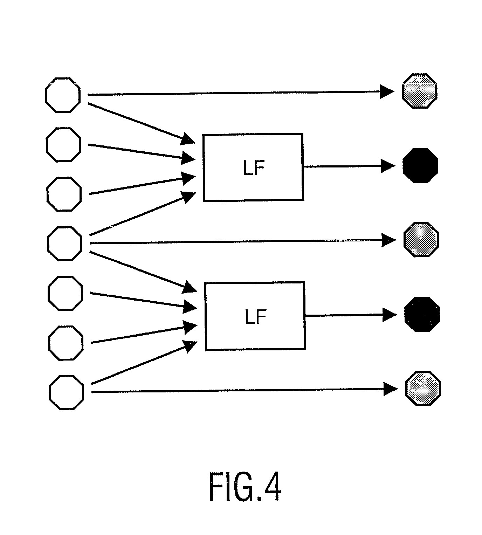

Le procédé de conversion de données vidéo comprend enfin une étape de sous-échantillonnage INT (22) apte à recevoir une somme (31) du bloc de données filtrées décodées et du bloc de données décodées de référence. Le sous-échantillonnage des données peut s'effectuer par simple recopie de certaines données filtrées décodées, par interpolation linéaire entre deux données filtrées décodées ou par une interpolation plus complexe. Selon une variante particulièrement avantageuse du mode de réalisation préféré, illustrée à la Fig. 4, le sous-échantillonnage s'effectue en gardant 1 donnée filtrée décodée sur 3 et en générant l'autre donnée décodée en faisant une interpolation lagrangienne LF sur quatre données filtrées décodées. L'interpolation lagrangienne utilise le filtre suivant [-1/8 5/8 5/8-1/8]. Elle a été choisie car elle donne de meilleurs résultats visuels qu'une interpolation linéaire, du fait qu'elle se base sur un plus grand nombre de données filtrées décodées, tout en gardant un coût de calcul faible.

Le procédé de conversion de données vidéo du mode de réalisation préféré ne donne pas un résultat identique à celui du premier mode de réalisation mais il correspond à une structure simplifiée de ce dernier. Il est de ce fait beaucoup plus efficace tout en gardant une qualité visuelle convenable de l'image de sortie, proche de celle issue du premier mode de réalisation de l'invention.

Il existe de nombreuses manières pour implémenter les étapes précédemment décrites au moyen de logiciel. Il est possible d'implémenter ces étapes au moyen d'un circuit de décodeur vidéo, ledit circuit étant convenablement programmé. Un jeu d'instructions contenu dans une mémoire de programmation peut provoquer le circuit à effectuer les différentes étapes précédemment décrites. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

La présente invention concerne également un décodeur vidéo, les blocs des Fig. 2 et 3 des étapes du procédé correspondant aux circuits du décodeur vidéo. Ainsi ledit décodeur vidéo transforme des données vidéo codées (1) selon une technique de codage par blocs et ayant un premier format d'image en des données vidéo décodées (2) ayant un second format d'image. Pour cela, il comprend notamment :
- des moyens de quantification inverse IQ (11) apte à fournir un bloc d'erreur de données transformées,
- des moyens de sous-échantillonnage INT (22) de données, apte à fournir des données vidéo décodées ayant le second format d'image, et
- une unité de filtrage-décodage, entre les moyens de quantification inverse et les moyens de sous-échantillonnage, comportant des moyens de troncature TRU (21a) d'un bloc de données transformées, des moyens d'ajout de zéros PAD (21b) au bloc tronqué de données transformées de manière à retrouver une taille du bloc avant troncature, et des moyens de transformation discrète inverse IDCT (21c) du bloc ainsi complété de manière à fournir un bloc de données filtrées décodées.

Un tel décodeur vidéo peut être utilisé comme premier étage d'un transcodeur de format. Ledit transcodeur comprend alors, en cascade, le décodeur, un étage de changement de format et un codeur vidéo, avec un bus passant des informations du décodeur au codeur.

Aucun signe de référence entre parenthèses dans le présent texte ne doit être interprété de façon limitative. Le verbe "comprendre" et ses conjugaisons n'exclut pas la présence d'autres éléments ou étapes que ceux listés dans une phrase. Le mot "un" ou "une" précédant un élément ou une étape n'exclut pas la présence d'une pluralité de ces éléments ou de ces étapes.

## Revendications

1. Procédé de conversion de données vidéo codées (1) selon une technique de codage par blocs et ayant un premier format d'image en des données vidéo décodées (2) ayant un second format d'image, ledit procédé comprenant une étape de quantification inverse (11) apte à fournir un bloc d'erreur de données transformées, **caractérisé en ce que** ledit procédé comprend les étapes de :
- sous-échantillonnage (22), apte à fournir des données vidéo décodées ayant le second format d'image, et
- filtrage-décodage, entre l'étape de quantification inverse et l'étape de sous-échantillonnage, comportant les sous-étapes de troncature (21a) d'un bloc de données transformées, d'ajout de zéros (21b) au bloc tronqué de données transformées de manière à retrouver une taille du bloc avant troncature, et de transformation discrète inverse (21c) du bloc ainsi complété de manière à fournir un bloc de données filtrées décodées.

2. Procédé de conversion de données vidéo selon la revendication 1 comprenant en outre une étape de compensation de mouvement (12) apte à fournir un bloc de données décodées de référence, **caractérisé en ce que** l'étape de filtrage-décodage est apte à traiter le bloc d'erreur de données transformées, et **en ce que** l'étape de sous-échantillonnage (22) est apte à recevoir une somme (31) du bloc de données filtrées décodées et du bloc de données décodées de référence.

3. Procédé de conversion de données vidéo selon la revendication 2, **caractérisé en ce** la sous-étape de troncature (21a) est apte à tronquer une moitié du bloc d'erreur de données transformées.

4. Procédé de conversion de données vidéo selon la revendication 1 comprenant en outre une étape de compensation de mouvement (12) apte à fournir un bloc de données décodées de référence, et une étape de transformation discrète (13) apte à transformer le bloc de données décodées de référence en un bloc de données transformées de référence, **caractérisé en ce que** l'étape de filtrage-décodage est apte à traiter une somme (14) du bloc d'erreur de données transformées et du bloc de données transformées de référence et **en ce que** l'étape de sous-échantillonnage (22) est apte à recevoir le bloc de données filtrées décodées.

5. Procédé de conversion de données vidéo selon la revendication 4, **caractérisé en ce** la sous-étape de troncature (21a) est apte à tronquer une fraction du bloc de données transformées issu de la somme (14), sensiblement égale à un rapport du second format d'image sur le premier format d'image.

6. Procédé de conversion de données vidéo selon la revendication 1, **caractérisé en ce que** l'étape de sous-échantillonnage (22) utilise une interpolation de Lagrange.

7. Dispositif de décodage de données vidéo codées (1) selon une technique de codage par blocs et ayant un premier format d'image en des données vidéo décodées (2) ayant un second format d'image, ledit dispositif comprenant des moyens de quantification inverse (11) apte à fournir un bloc d'erreur de données transformées, **caractérisé en ce qu'**il comprend en outre :
- des moyens de sous-échantillonnage (22), apte à fournir des données vidéo décodées ayant le second format d'image, et
- une unité de filtrage-décodage, entre les moyens de quantification inverse et les moyens de sous-échantillonnage, comportant des moyens de troncature (21a) d'un bloc de données transformées, des moyens d'ajout de zéros (21b) au bloc tronqué de données transformées de manière à retrouver une taille du bloc avant troncature, et des moyens de transformation discrète inverse (21c) du bloc ainsi complété de manière à fournir un bloc de données filtrées décodées.

8. Produit "programme d'ordinateur" pour décodeur vidéo comprenant un jeu d'instructions qui, lorsqu'elles sont chargées dans un circuit dudit décodeur vidéo, amène celui-ci à effectuer le procédé de conversion de données vidéo selon l'une des revendications 1 à 6.
